# EUROPÄISCHE PATENTANMELDUNG

(11) **EP 2 080 455 A1**
(43) Veröffentlichungstag der Anmeldung: **22.07.2009**
(21) Anmeldenummer: 09000187.6
(22) Anmeldetag: 09.01.2009
(51) Int. Cl.: A47J 31/36, F16K 11/074

(54) **Mehrwege-Absperrvorrichtung für Flüssigkeiten, insbesondere zur Anwendung an Getränkeautomaten**

(30) Priorität: 15.01.2008 DE 202008000539 U
(71) Anmelder: A. u. K. Müller GmbH & Co. KG, 40595 Düsseldorf (DE)
(72) Erfinder: Pipplies, Wilhelm, 47805 Krefeld (DE); Riedel, Heinz-Dieter, 40593 Düsseldorf (DE)
(74) Vertreter: Feder Walter Ebert

(57) **Zusammenfassung**

Eine Mehrwege-Absperrvorrichtung für Flüssigkeiten, insbesondere zur Anwendung an Getränkeautomaten. In einem mit einem Flüssigkeitseinlass und mehreren Flüssigkeitsauslässen (4) versehenen Gehäuse (11) ist ein scheibenförmiger Rotor (5) über einem scheibenförmigen Stator (7) angeordnet. Der Rotor (5) weist einen an den Flüssigkeitseinlass angeschlossenen Durchtrittskanal (5.1) auf und der Stator (7) ist mit mehreren an Flüssigkeitsauslässen (4) angeschlossenen Durchtrittskanälen (7.1) versehen. Zwischen Rotor (5) und Stator (7) ist eine um die Rotorachse mitverdrehbare, einen Durchtrittskanal (6.1) aufweisende Zuordnungsscheibe (6) angeordnet. In vorgegebenen Winkelpositionen von Rotor (5) und Zuordnungsscheibe (6) ist der Flüssigkeitseinlass jeweils über den Durchtrittskanal (6.1) der Zuordnungsscheibe (6) und einem der Durchtrittskanäle (7.1) des Stators (7) mit einem der Flüssigkeitsauslässen (4) verbunden.

## Beschreibung

Die Erfindung betrifft eine Mehrwege-Absperrvorrichtung für Flüssigkeiten, insbesondere zur Anwendung an Getränkeautomaten mit den Merkmalen aus dem Oberbegriff des Patentanspruchs 1. Eine derartige Absperrvorrichtung ist unter der Bezeichnung "Steuerventil für Heißgetränkeautomaten" in DE 196 47 384 C2 beschrieben.

Mit der bekannten Anordnung kann sowohl Heißwasser als auch Druckluft nach einem vorgegebenen Prozess geschaltet werden.

Ausgehend von diesem Stand der Technik besteht die der Erfindung zugrunde liegende Aufgabe darin, eine Mehrwege-Absperrvorrichtung mit den Merkmalen aus dem Oberbegriff des Patentanspruchs 1 so auszugestalten, dass sie in einer Mehrzahl von unterschiedlichen Durchtrittswegen für die Flüssigkeit automatisch ansteuerbar ist und auch eine sichere Absperrung sämtlicher Durchtrittswege ermöglicht.

Die Lösung dieser Aufgabe erfolgt erfindungsgemäß mit den Merkmalen aus dem kennzeichnenden Teil des Patentanspruchs 1. Vorteilhafte Weiterbildungen der erfindungsgemäßen Mehrwege-Absperrvorrichtung sind in den abhängigen Ansprüchen beschrieben. Ein Grundgedanke der Erfindung besteht darin, zwischen dem Rotor und dem Stator der Absperrvorrichtung eine an den Rotor ankoppelbare und mit ihm verdrehbare Zuordnungsscheibe anzuordnen, die mindestens einen Durchtrittskanal aufweist, der durch entsprechende Drehung an einen der Durchtrittskanäle des Stators angeschlossen werden kann. Bei dieser Verdrehung besteht keine Verbindung zwischen dem Durchtrittskanal des Rotors und dem Durchtrittskanal der Zuordnungsscheibe, so dass am Ende dieser Drehung noch kein Flüssigkeitsdurchtritt stattfindet, sondern nur ein bestimmter Flüssigkeitsaustritt ausgewählt ist. Bei einer zweiten Drehung des Rotors, die in gegensinniger Drehung stattfindet, wird die Zuordnungsscheibe in der nach der ersten Drehung erreichten Stellung festgehalten und lediglich der Rotor so verdreht, dass sein Durchtrittskanal an den Durchtrittskanal der Zuordnungsscheibe angeschlossen wird und somit eine den Flüssigkeitsdurchtritt gestattende Verbindung zwischen Flüssigkeitseinlass und Flüssigkeitsauslass hergestellt ist.
Die Verdrehung des Rotors kann zweckmäßigerweise mittels eines elektrischen Schrittmotors mit oder ohne Getriebe erfolgen, mit dem genau vorgegebene Winkelstellungen des Rotors programmgesteuert vorgegeben werden. Auf diese Weise ist eine exakte, vollautomatische Steuerung der erfindungsgemäßen Mehrwege-Absperrvorrichtung möglich.

Im folgenden wird anhand der beigefügten Zeichnungen ein Ausführungsbeispiel für eine Mehrwege-Absperrvorrichtung für Flüssigkeiten nach der Erfindung näher erläutert.

In den Zeichnungen zeigen:

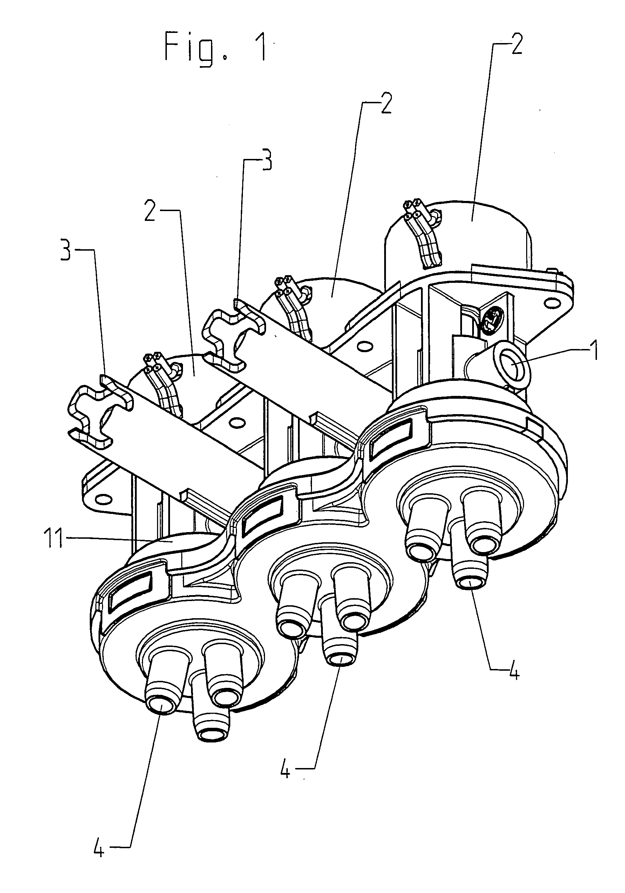

- Fig. 1: eine Anordnung aus drei Absperrvorrichtungen in perspektivischer Darstellung;

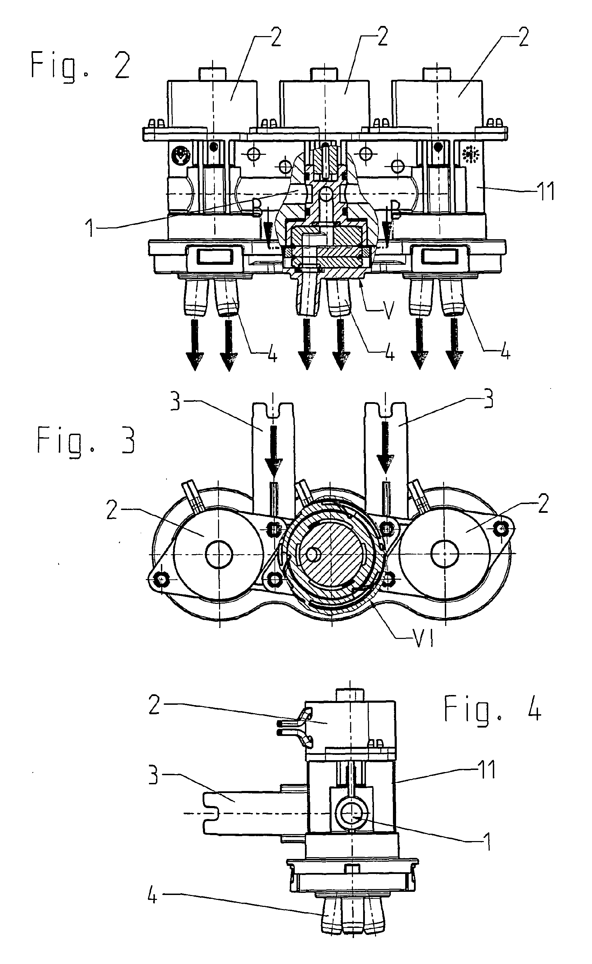

- Fig. 2: die Anordnung nach Fig. 1 in einer teilweise geschnittenen Seitenansicht auf die Breitseite;
- Fig. 3: die Anordnung nach Fig. 1 in einer nach der Linie B-B in Fig. 2 teilweise geschnittenen Ansicht von oben;
- Fig. 4: die Anordnung nach Fig. 1 in einer Ansicht auf die Schmalseite;
- Fig. 5: in vergrößerter Darstellung den Bereich V in Fig. 2;
- Fig. 6: in vergrößerter Darstellung den Bereich VI aus Fig. 3.

Die Zeichnungen zeigen eine Anordnung aus drei Mehrwege-Absperrvorrichtungen für Flüssigkeiten, die beispielsweise an einem nicht dargestellten Getränkeautomaten angeordnet sein kann. Die Absperrvorrichtungen besitzen jeweils ein Gehäuse 11, das an seiner Unterseite drei Flüssigkeitsauslässe 4 aufweist. Weiterhin sind an der Anordnung zwei Flüssigkeitseinlässe 3 vorgesehen, die in einen allen drei Absperrvorrichtungen gemeinsamen und durch die Gehäuse hindurchgeführten Zuführungskanal 1 einmünden. Die Innenräume der Gehäuse 11 besitzen zylindrische Mantelflächen unterschiedlichen Durchmessers. Im in den Zeichnungen unteren Teil der Gehäuse 11 ist jeweils ein als zylindrische Scheibe ausgebildeter Rotor 5 angeordnet, der auf einer Zuordnungsscheibe 6 aufsitzt, die wiederum über einem Stator 7 angeordnet ist. Der Rotor 5, die Zuordnungsscheibe 6 und der Stator 7 bestehen vorzugsweise aus Keramikmaterial. Der Rotor 5 ist über eine Verbindungswelle 14 an einen an der Oberseite des Gehäuses 11 angeordneten elektrischen Schrittmotor 2 angeschlossen. Hierzu besitzt die Verbindungswelle 14 an ihrem Abtriebsende eine Aufnahmebuchse 14.1, in welche der Rotor 5 eingesetzt ist. Das Antriebsende 14.4 der Verbindungswelle 14 ist über eine mittels einer Kupplung 15 mit der Verbindungswelle 14 gekoppelten Welle 16 mit der Abtriebswelle des elektrischen Schrittmotors 2 verbunden.
Die Verbindungswelle 14 besteht aus Kunststoffmaterial.

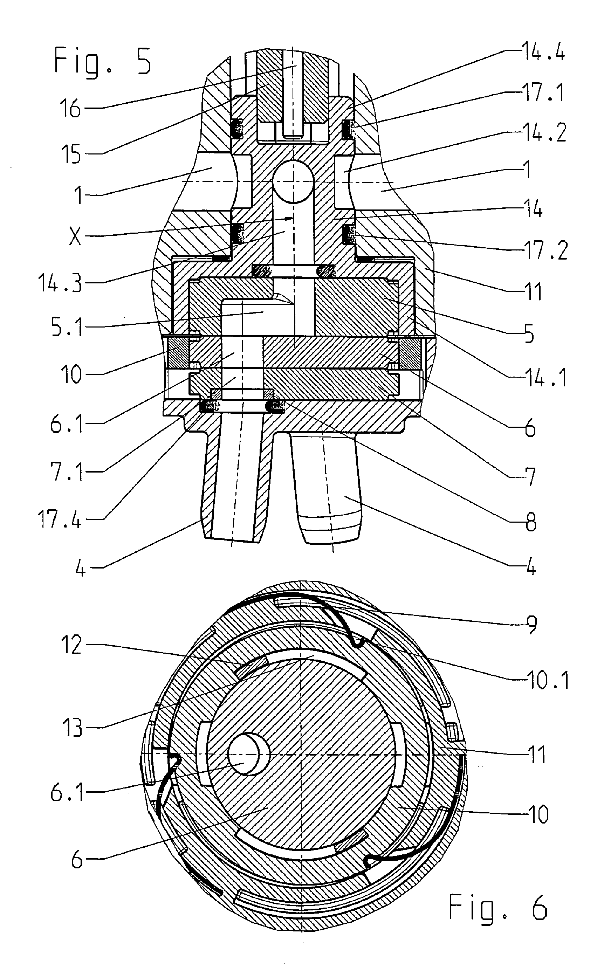

Der durch die Gehäuse 11 geführte Zuführungskanal 1 ist jeweils über eine Ringnut 14.2 in der Verbindungswelle 14 mit einem durch die Verbindungswelle 14 geführten Durchtrittskanal 14.3 verbunden, dessen Austrittsöffnung auf der Gehäuseachse X liegt und der Eintrittsöffnung eines Durchtrittskanals 5.1 im Rotor 5 gegenüberliegt. Dieser Durchtrittskanal 5.1 des Rotors 5 besitzt einen auf der Gehäuseachse X liegenden angeschlossenen Eintrittsabschnitt und einen radial zum Eintrittsabschnitt versetzten Austrittsabschnitt. Der fest mit dem Gehäuse 11 verbundene Stator 7 besitzt drei Durchtrittskanäle 7.1, von denen nur einer in Fig. 5 sichtbar ist, deren vom Rotor 5 abgewandte Austrittsöffnungen den Eintrittsöffnungen von am Gehäuse angeordneten Flüssigkeitsauslässen 4 gegenüberliegen.

Die zwischen dem Rotor 5 und dem Stator 7 angeordnete Zuordnungsscheibe 6 besitzt einen Durchtrittskanal 6.1. Im dargestellten Ausführungsbeispiel sind die Durchtrittskanäle 7.1 bzw. 6.1 im Stator 7 und in der Zuordnungsscheibe 6 als axial-parallele Durchtrittsbohrungen ausgebildet. Sie können aber grundsätzlich auch einen anderen Verlauf haben.
Die Zuordnungsscheibe setzt sich aus einem zentralen, den Durchtrittskanal 6.1 aufweisenden Teil 6 und einem, den zentralen Teil umgebenden Ringteil 10 zusammen, die fest miteinander gekoppelt sind. Zwischen dem zentralen Teil 6 und dem Ringteil 10 sind Führungsschlitze 13 angeordnet, in welche Mitnehmerstifte 12 eingreifen. Diese Mitnehmerstifte 12 sind in nicht dargestellter Weise an der Verbindungswelle 14 befestigt und durch ebenfalls nicht dargestellte Ausnehmungen im Rotor 5 hindurchgeführt. Bei einer Verdrehung der Verbindungswelle 14 bzw. des Rotors 5 werden die Zuordnungsscheibe 6 mit dem Ringteil 10 bei einer Drehung im Uhrzeigersinn mitgenommen, wenn sich die Mitnehmer 12 am Ende des Führungsschlitzes 13 befinden. Bei einer Drehung gegen den Uhrzeigersinn laufen die Mitnehmer 12 in den Führungsschlitzen 13, während das Ringteil 10 und damit auch die Zuordnungsscheibe 6 mittels einer Ratschkupplung festgehalten werden. Diese Ratschkupplung besitzt am Gehäuse 11 befestigte und in Ausnehmungen 10.1 am äußeren Umfang des Ringteils 10 eingreifende Blattfedern 9.

Die Durchtrittskanäle 5.1, 6.1 und 7.1 im Rotor 5, der Zuordnungsscheibe 6 und dem Stator 7 sind nun derart angeordnet, dass in einer ersten Position von Rotor 5, Zuordnungsscheibe 6 und Stator 7 die Eintrittsöffnungen des Durchtrittskanals 7.1 des Stators 7 gegenüber der Austrittsöffnung des Durchtrittskanals 6.1 der Zuordnungsscheibe den Flüssigkeitsdurchtritt verhindernd winkelversetzt angeordnet sind. Durch Drehung des Rotors 5 in einer ersten Drehrichtung, also im Uhrzeigersinn, ist eine zweite Position einstellbar, in welcher der Durchtrittskanal 6.1 der Zuordnungsscheibe 6 an einen der Durchtrittskanäle 7.1 des Stators angeschlossen ist. Durch die Winkelversetzung zwischen dem Durchtrittskanal 5.1 des Rotors 5 und dem Durchtrittskanal 6.1 der Zuordnungsscheibe 6 ist nach wie vor kein Flüssigkeitsaustritt möglich. Nunmehr wird der Rotor 5 in der zweiten Drehrichtung, also gegen den Uhrzeigersinn, bei durch die Blattfedern 9 der Ratschkupplung festgehaltener Zuordnungsscheibe 6 in eine dritte Position bewegt, in welcher der Durchtrittskanal 5.1 des Rotors 5 an den Durchtrittskanal 6.1 der Zuordnungsscheibe 6 angeschlossen ist. Während dieser Bewegung durchlaufen die Mitnehmerstifte 12 den Führungsschlitz 13. Diese dritte Position ist in den Figuren 5 und 6 dargestellt. Wie erkennbar, ist in dieser Position der Flüssigkeitsdurchtritt vom Flüssigkeitseinlass 3 über den Zuführungskanal 1 und die Durchtrittskanäle 14.3, 5.1, 6.1 und 7.1 zu einem der Flüssigkeitsauslässe 4 freigegeben.

Beim Schließen der Absperrvorrichtung läuft die Bewegung umgekehrt, indem zunächst der Rotor im Uhrzeigersinn verdreht wird, wobei die Mitnehmerstifte 12 sich frei im Führungsschlitz 13 bewegen. Durch das Auseinanderbewegen der Durchtrittskanäle 5.1 und 6.1 wird also zunächst der Flüssigkeitsdurchtritt unterbrochen. Bei einer Weiterbewegung des Rotors 5 im Uhrzeigersinn geraten die Mitnehmerstifte 12 an das Ende der Führungsschlitze 13, so dass die Zuordnungsscheibe 6 im Uhrzeigersinn mitbewegt wird. Sie kann dann in die ursprüngliche Ausgangsposition bewegt werden oder in eine neue Ausgangsposition, in welcher der Durchtrittskanal 6.1 der Zuordnungsscheibe 6 an einen anderen Durchtrittskanal 7.1 des Stators 7 angeschlossen ist.

Die Abdichtung der gegeneinander verdrehbaren Bauteile wird, wie aus Fig. 5 zu entnehmen, durch entsprechende Dichtungsringe 17.1, 17.2, 17.3 und 17.4 sichergestellt. Wie aus Fig. 5 zu ersehen, ist am Austrittsende des Durchtrittskanals 7.1 des Stators 7 eine, den Durchtrittsquerschnitt bestimmende, Blende 8 angeordnet, mittels der die Einrichtung an unterschiedliche Druckverhältnisse angepasst werden kann.

## Patentansprüche

1. Mehrwege-Absperrvorrichtung für Flüssigkeiten, insbesondere zur Anwendung an Getränkeautomaten, mit einem Gehäuse, das mindestens einen Flüssigkeitseinlass und mehrere Flüssigkeitsauslässe besitzt, und dessen Innenraum mindestens in Teilbereichen eine zylindrische Mantelfläche aufweist, und bei der in dem Gehäuse ein im wesentlichen scheibenförmiger Rotor auf einem im wesentlichen scheibenförmigen, mit dem Gehäuse unverdrehbar verbundenen Stator angeordnet ist, welcher mit Durchtrittskanälen versehen ist, deren vom Rotor abgewandte Austrittsöffnungen Eintrittsöffnungen von am Gehäuse angeordneten Flüssigkeitsauslässen gegenüberliegen, wobei der Rotor mittels eines am Gehäuse angeordneten Motors um die Achse der zylindrischen Mantelflächen des Gehäuses in unterschiedliche Winkelpositionen verdrehbar und derart ausgestaltet ist, dass in vorgegebenen Winkelpositionen des Rotors der Flüssigkeitseinlass mindestens einem der Flüssigkeitsauslässe zugeordnet ist, **dadurch gekennzeichnet, dass** zwischen dem Rotor (5) und dem Stator (7) eine an den Rotor (5) ankoppelbare, um die Rotorachse (X) mitverdrehbare Zuordnungsscheibe (6) angeordnet ist, welche mindestens einen Durchtrittskanal (6.1) aufweist, der in vorgegebenen Winkelpositionen der Zuordnungsscheibe (6) an einen der Durchtrittskanäle (7.1) des Stators (7) anschließt und der Rotor (5) mindestens einen Durchtrittskanal (5.1) aufweist, dessen Eintrittsöffnung mindestens in vorgegebenen Winkelpositionen des Rotors (5) mit dem Flüssigkeitseinlass (3) verbunden ist, und dessen Austrittsöffnung in vorgegebenen Winkelpositionen an den Durchtrittskanal (6.1) der Zuordnungsscheibe (6) angeschlossen ist, wobei die Kopplung zwischen Rotor (5) und Zuordnungsscheibe (6) derart ist, dass in einer ersten Drehrichtung des Rotors (5) die Zuordnungsscheibe (6) vom Rotor (5) mitverdreht wird, während in einer zweiten, gegensinnigen, Drehrichtung des Rotors (5) die Zuordnungsscheibe (6) unverdrehbar am Stator (7) festgehalten ist.

2. Absperrvorrichtung nach Anspruch 1, **dadurch gekennzeichnet, dass** die Durchtrittskanäle (5.1, 6.1, 7.1) im Rotor (5), der Zuordnungsscheibe (6) und dem Stator (7) derart angeordnet sind, dass in einer Ausgangsposition von Rotor (5), Zuordnungsscheibe (6) und Stator (7) sowohl die Austrittsöffnung des Durchtrittskanals (5.1) des Rotors (5) gegenüber der Eintrittsöffnung des Durchtrittskanals (6.1) der Zuordnungsscheibe (6) als auch die Austrittsöffnung des Durchtrittskanals (6.1) gegenüber den Eintrittsöffnungen der Durchtrittskanäle (7.1) des Stators (7) jeden Flüssigkeitsdurchtritt verhindernd winkelversetzt angeordnet sind und durch Drehung des Rotors (5) in der ersten Drehrichtung eine zweite Position einstellbar ist, in welcher der Durchtrittskanal (6.1) der Zuordnungsscheibe (6) an einen der Durchtrittskanäle (7.1) des Stators (7) anschließbar ist und sodann durch Drehung des Rotors (5) in der zweiten Drehrichtung bei festgehaltener Zuordnungsscheibe (6) eine dritte Position einstellbar ist, in welcher der Durchtrittskanal (5.1) des Rotors (5) an den Durchtrittskanal (6.1) der Zuordnungsscheibe (6) den Flüssigkeitsdurchtritt vom Flüssigkeitseinlass (3) zu einem der Flüssigkeitsauslässe (4) freigebend anschließbar ist.

3. Absperrvorrichtung nach Anspruch 1 oder 2, **dadurch gekennzeichnet, dass** die Kopplung zwischen Rotor (5) und Zuordnungsscheibe (6) durch axial-parallel angeordnete Mitnehmerstifte (12) bewirkt wird, die zusammen mit dem Rotor (5) bewegbar sind und in an der Zuordnungsscheibe (6) angeordnete, sich über einen vorgegebenen Winkelbereich erstreckende Schlitzführungen (13) eingreifen, wobei die zweite Drehrichtung der Zuordnungsscheibe (6) durch eine Ratschenkupplung (9-10.1) blockiert ist.

4. Absperrvorrichtung nach Anspruch 3, **dadurch gekennzeichnet, dass** die Zuordnungsscheibe zweiteilig aufgebaut ist, mit einem zentralen, den Durchtrittskanal (6.1) enthaltenden Teil (6) und einem, den zentralen Teil (6) umgebenden Ringteil (10), wobei die Führungsschlitze (13) zwischen dem zentralen Teil (6) und dem Ringteil (10) angeordnet sind und die Ratschenkupplung am Gehäuse (11) befestigte und in Ausnehmungen (10.1) am äußeren Umfang des Ringteils (10) eingreifende Blattfedern (9) aufweist.

5. Absperrvorrichtung nach einem der Ansprüche 1 bis 4, **dadurch gekennzeichnet, dass** die Durchtrittskanäle (7.1, 6.1) im Stator (7) und in der Zuordnungsscheibe (6) als axial-parallele Durchtrittsbohrungen ausgebildet sind.

6. Absperrvorrichtung nach einem der Ansprüche 1 bis 5, **dadurch gekennzeichnet, dass** der Rotor (5) einen Durchtrittskanal (5.1) aufweist, der einen auf der Gehäuseachse (X) liegenden, an den Flüssigkeitseinlass (3) angeschlossenen Eintrittsabschnitt und einen radial zum Eintrittsabschnitt versetzten Austrittsabschnitt aufweist.

7. Absperrvorrichtung nach einem der Ansprüche 1 bis 6, **dadurch gekennzeichnet, dass** Rotor (5), Stator (7) und mindestens der zentrale Teil (6) der Zuordnungsscheibe aus einem Keramikmaterial bestehen.

8. Absperrvorrichtung nach Anspruch 7, **dadurch gekennzeichnet, dass** die Kopplung zwischen dem Rotor (5) und der Abtriebswelle des Motors (2) über eine Verbindungswelle (14) erfolgt, die an ihrem Abtriebsende eine Aufnahmebuchse (14.1) aufweist, in welche der Rotor (5) eingesetzt ist.

9. Absperrvorrichtung nach Anspruch 8, **dadurch gekennzeichnet, dass** durch die Verbindungswelle (14) ein den Flüssigkeitseinlass (3) an den Durchtrittskanal (5.1) des Rotors (5) anschließender Verbindungskanal (14.3) geführt ist.

10. Absperrvorrichtung nach Anspruch 8 oder 9, **dadurch gekennzeichnet, dass** die Verbindungswelle (14) aus Kunststoffmaterial besteht.

11. Absperrvorrichtung nach Anspruch 3 und 10, **dadurch gekennzeichnet, dass** die Mitnehmerstifte (12) an der Verbindungswelle (14) befestigt und durch Ausnehmungen im Rotor (5) hindurchgeführt sind.

12. Absperrvorrichtung nach einem der Ansprüche 1 bis 11, **dadurch gekennzeichnet, dass** der Moto (2) als elektrischer Schrittmotor ausgebildet ist.

13. Absperrvorrichtung nach einem der Ansprüche 1 bis 12, **dadurch gekennzeichnet, dass** an der Austrittsöffnung des Durchtrittskanals (7.1) des Stators (7) eine den Durchtrittsquerschnitt bestimmende Blende (8) angeordnet ist.
